# EUROPEAN PATENT SPECIFICATION

(11) **EP 4 390 168 B1**
(45) Date of publication and mention of the grant of the patent: **30.09.2026**
(21) Application number: 22858301.9
(22) Date of filing: 02.08.2022
(51) Int. Cl.: F16C 41/00, F16C 19/18, F16C 33/76, B60B 27/00, F16C 33/78, F16C 33/72

(54) **SENSOR HOLDER AND BEARING DEVICE FOR VEHICLE WHEEL**
SENSORHALTER UND LAGERVORRICHTUNG FÜR FAHRZEUGRAD
SUPPORT DE CAPTEUR ET DISPOSITIF DE PALIER POUR ROUE DE VÉHICULE

(30) Priority: 20.08.2021 JP 2021135228
(43) Date of publication of application: 26.06.2024
(73) Proprietor: NTN Corporation, Osaka-shi, Osaka 530-0005 (JP)
(72) Inventor: SAKURAI, Ryou, Iwata-shi, Shizuoka 438-8510 (JP)
(74) Representative: Grünecker Patent- und Rechtsanwälte PartG mbB
(86) International application number: PCT/JP2022/029619
(87) International publication number: WO 2023/021980

(56) References cited:
- WO-A1-2016/129554
- JP-A- 2006 275 205
- US-A1- 2006 228 062
- US-A1- 2018 003 238

## Description

### TECHNICAL FIELD

The present invention relates to a sensor holder and a bearing device for vehicle wheel.

### BACKGROUND ART

Conventionally, a bearing device for vehicle wheel that rotatably supports a wheel in a suspension device of an automobile or the like is known. There is a bearing device for vehicle wheel in which a rotational speed detection device that detects a rotational speed of a wheel is added to control an antilock brake system (ABS).

For example, in a bearing device for vehicle wheel disclosed in Patent Literature 1, an encoder is supported at an axial end of an inner member, and a sensor holder that supports a sensor for detecting displacement of the encoder is attached to an axial end of an outer member.

The sensor holder includes a cap part fitted to the axial end of the outer member, a sensor support part protruding from a cap part toward one side in the axial direction and supporting the sensor for detecting displacement of the encoder, and a nut holding part protruding from the cap part toward one side in the axial direction and holding a nut for fixing the sensor to the cap part. A mounting flange is fixed to the sensor, and the sensor is fixed to the cap part by fastening the mounting flange to the nut with a bolt in a state where the sensor is fitted to the sensor support part.

The sensor support part and the nut holding part protrude at the same height in the axial direction, and the mounting flange is in contact with both the sensor support part and the nut holding part in a state where the sensor is fixed to the cap part. A further example of roller bearing devices is disclosed in Patent Literature 2.

### CITATION LIST

### PATENT LITERATURE

Patent Literature 1: JP-A-2016-148422 Gazette
Patent Literature 2: US 2006/228062 A1

### SUMMARY OF INVENTION

### TECHNICAL PROBLEMS

As described above, since a sensor support part and a nut holding part protrude at the same height and are both in contact with a mounting flange, when the sensor support part is warped or a sensor holder has been deformed when being attached to an outer member, a sensor in contact with the sensor support part may be tilted to affect the performance of the sensor to read an encoder.

The present invention has been made in view of the above situation, and provides a sensor holder and a bearing device for vehicle wheel that can prevent an effect on a performance of a sensor to read an encoder caused by a warp of a sensor support part, deformation of the sensor holder, or the like.

### SOLUTIONS TO PROBLEMS

The present invention is defined in independent claims 1 and 3. Preferred features are laid down in dependent claim 2.

### ADVANTAGEOUS EFFECTS OF INVENTION

According to the present invention, an effect on a performance of a sensor to read an encoder can be prevented.

### BRIEF DESCRIPTION OF DRAWINGS

FIG. 1 is a side sectional view illustrating a bearing device for vehicle wheel.
FIG. 2A is an upper perspective view illustrating a sensor holder, and FIG. 2B is a lower perspective view illustrating the sensor holder.
FIG. 3 is a view illustrating a sensor holder viewed along an axial direction from an inner-side.
FIG. 4 is a side sectional view illustrating the sensor holder.
FIG. 5 is a partially enlarged side sectional view illustrating a sensor holder to which a rotation speed sensor is attached.
FIG. 6 is a partially enlarged side sectional view illustrating the sensor holder.

### DESCRIPTION OF EMBODIMENT

Hereinafter, a mode for carrying out the present invention will be described with reference to the accompanying drawings.

### [Bearing device for vehicle wheel]

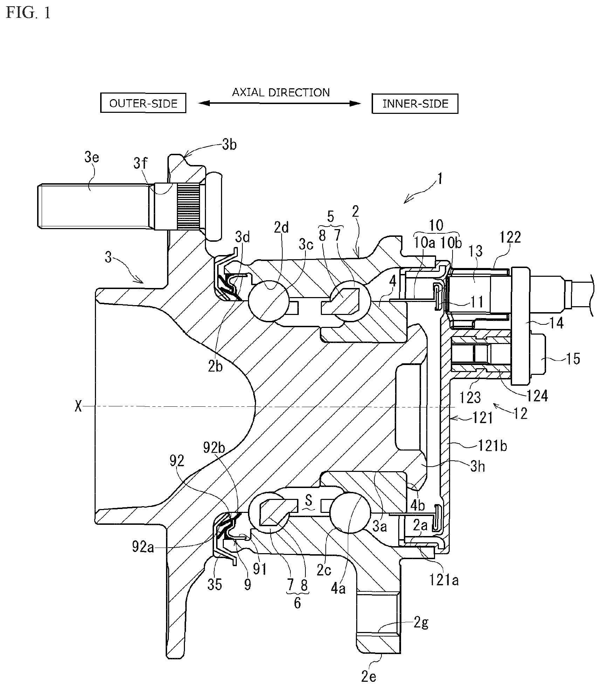

A bearing device for a vehicle wheel 1 illustrated in FIG. 1 is one embodiment of a bearing device for vehicle wheel including a sensor holder according to the present invention, and rotatably supports a wheel in a suspension device of a vehicle such as an automobile.

The bearing device for a vehicle wheel 1 has a configuration called a third generation, and includes an outer ring 2 that is an outer member, a hub ring 3 and an inner ring 4 that are inner members, two roller rows of an inner-side ball row 5 and an outer-side ball row 6, a magnetic encoder 11, and a sensor holder 12.

In the following description, the term, axial direction, represents a direction along a rotation axis X of the bearing device for a vehicle wheel 1. Furthermore, the term, inner-side, represents one side in the axial direction which is closer to a vehicle body when the bearing device for a vehicle wheel 1 is attached to the vehicle body, and the term, outer-side, represents the other side in the axial direction which is closer to the wheel when the bearing device for a vehicle wheel 1 is attached to the vehicle body.

On an inner-side end of the outer ring 2, an inner-side opening 2a to which the sensor holder 12 can be fitted is formed. On an outer-side end of the outer ring 2, an outer-side opening 2b to which an outer-side sealing member 9 can be fitted is formed. The sensor holder 12 is fitted to the inner-side opening 2a that opens at one end side in the axial direction of an annular space S formed by the outer ring 2 and the hub ring 3, and the outer-side sealing member 9 is fitted to the outer-side opening 2b that is an opening on the other end side in the axial direction of the annular space S, whereby the annular space S, which is the inside of the bearing is sealed.

On the inner circumferential surface of the outer ring 2, an outer raceway surface 2c on the inner-side and an outer raceway surface 2d on the outer-side are formed. On the outer circumferential surface of the outer ring 2, a vehicle body mounting flange 2e for mounting the outer ring 2 to a vehicle body member is integrally formed. The vehicle body mounting flange 2e is provided with a bolt hole 2g into which a fastening member (a bolt in the embodiment) for fastening together the vehicle body member and the outer ring 2 is inserted. The outer ring 2 is located on the outer diameter side of the hub ring 3 and the inner ring 4.

On the outer circumferential surface of an inner-side end of the hub ring 3, a small-diameter stepped portion 3a of which diameter is smaller than that of the outer-side end of the hub ring 3 is formed. On an outer-side end of the hub ring 3, a vehicle wheel mounting flange 3b for mounting a vehicle wheel is integrally formed. A plurality of bolt holes 3f is formed in the vehicle wheel mounting flange 3b. A hub bolt 3e for fastening the hub ring 3 to the vehicle wheel or a brake part is press-fitted in the bolt hole 3f.

On the outer circumferential surface of the hub ring 3, an inner raceway surface 3c is provided on the outer-side so as to face the outer raceway surface 2d on the outer-side of the outer ring 2. That is, on the outer-side of the inner member, the hub ring 3 forms the inner raceway surface 3c. A seal land portion 3d for the outer-side sealing member 9 is formed on a proximal side of the vehicle wheel mounting flange 3b of the hub ring 3.

The outer-side sealing member 9 includes a core metal 91 fitted in the outer-side opening 2b of the outer ring 2, and a seal member 92 integrally joined to the core metal 91. A metal ring 35 is fitted in the seal land portion 3d of the hub ring 3. A side lip 92a of the seal member 92 is in sliding contact with the metal ring 35. That is, the side lip 92a of the seal member 92 is in sliding contact with the seal land portion 3d of the hub ring 3 via the metal ring 35.

The bearing device for a vehicle wheel 1 however may be configured to have no metal ring 35 so that the side lip 92a of the seal member 92 is in direct sliding contact with the seal land portion 3d of the hub ring 3. A grease lip 92b of the seal member 92 is in direct sliding contact with the seal land portion 3d of the hub ring 3.

The inner ring 4 is provided on the small-diameter stepped portion 3a of the hub ring 3. The inner ring 4 is fixed to the small-diameter stepped portion 3a of the hub ring 3 by press fitting and swaging. The inner ring 4 applies a preload to the inner-side ball row 5 and the outer-side ball row 6 which are roller rows. The inner ring 4 has an inner-side end surface 4b at an inner-side end. A swaged portion 3h is formed at the inner-side end of the hub ring 3 by swaging to be in contact with the inner-side end surface 4b of the inner ring 4.

On the outer circumferential surface of the inner ring 4, an inner raceway surface 4a is provided on the inner-side so as to face the outer raceway surface 2c on the inner-side of the outer ring **2.** That is, on the inner-side of the inner member, the inner ring 4 forms the inner raceway surface 4a.

The inner-side ball row 5 and the outer-side ball row 6, which are roller rows, are configured that a plurality of balls 7, or rolling elements, is held by a cage 8. The inner-side ball row 5 is held between the inner raceway surface 4a of the inner ring 4 and the outer raceway surface 2c on the inner-side of the outer ring 2 so as to roll. The outer-side ball row 6 is held between the inner raceway surface 3c of the hub ring 3 and the outer raceway surface 2d on the outer-side of the outer ring 2 so as to roll. That is, the inner-side ball row 5 and the outer-side ball row 6 are stored between the raceway surfaces of the outer member and the inner member so as to roll. The outer ring 2 rotatably supports the hub ring 3 and the inner ring 4 via the inner-side ball row 5 and the outer-side ball row 6.

In the bearing device for a vehicle wheel 1, the outer ring 2, the hub ring 3, the inner ring 4, the inner-side ball row 5, and the outer-side ball row 6 constitute a double-row angular ball bearing. The bearing device for a vehicle wheel 1 may constitute a double-row tapered roller bearing instead of the double-row angular ball bearing.

A support ring 10 is fitted to the inner-side end, which is one axial end, of the inner ring 4. The support ring 10 includes a cylindrical portion 10a press-fitted on the outer diameter of the inner ring 4 and an upright plate 10b extending from an inner-side end of the cylindrical portion 10a to the outer diameter side and the inner diameter side. The magnetic encoder 11 is integrally joined to a side surface on the inner-side of the upright plate 10b by vulcanized adhesion. In the magnetic encoder 11, magnetic powder such as ferrite is mixed in synthetic rubber, and the magnetic encoder 11 is magnetized to have magnetic poles N and S alternately arranged at a constant pitch in the circumferential direction. The magnetic encoder 11 is an example of an encoder.

The sensor holder 12 is attached to the inner-side opening 2a that opens at one end side in the axial direction of the outer ring 2 so as to close the inner-side opening 2a. A rotation speed sensor 13 is attached to the sensor holder 12 at a location facing the magnetic encoder 11. The rotation speed sensor 13 and the magnetic encoder 11 are disposed to face each other in the axial direction with a predetermined air gap (axial gap) therebetween and through the sensor holder 12. The rotational speed of the inner ring 4 can be detected by detecting the displacement of the magnetic encoder 11 by the rotation speed sensor 13. The rotation speed sensor 13 is an example of a sensor that detects the displacement of the encoder.

### [Sensor holder]

The sensor holder 12 is formed of, for example, a resin member. When the sensor holder 12 is formed of a resin member, the sensor holder 12 may be an injection-molded product or a machined product.

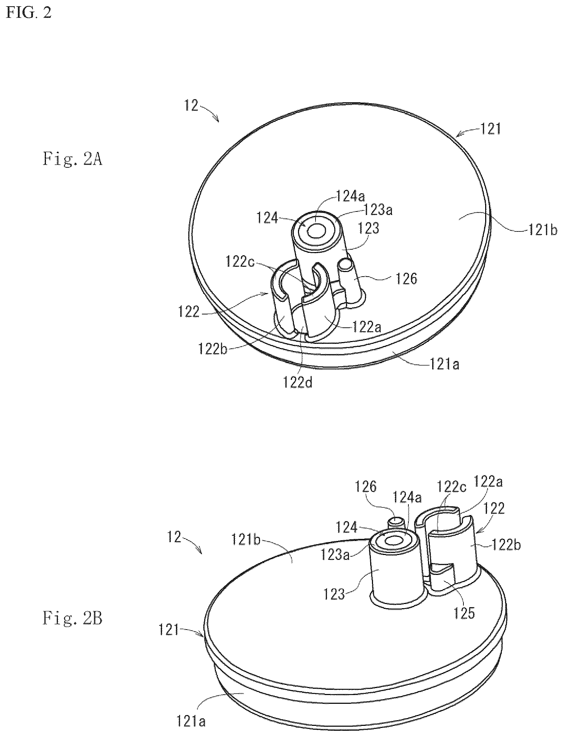

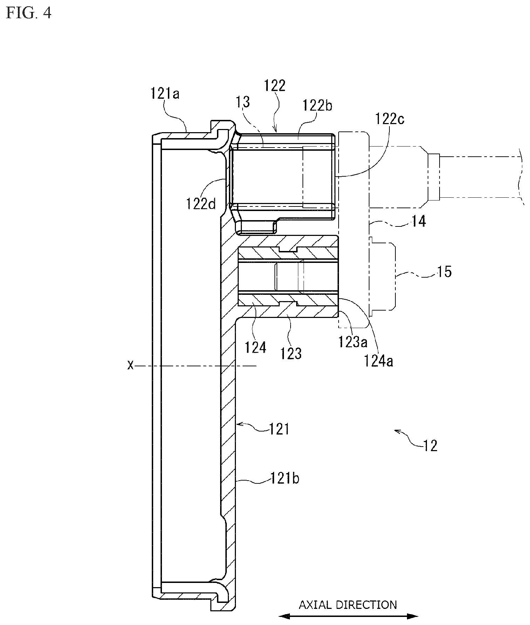

As illustrated in FIGS. 2 to 4, the sensor holder 12 includes a cap part 121, a sensor support part 122, a nut holding part 123, and a nut 124.

The cap part 121 has a cylindrical fitting portion 121a press-fitted to the inner-side opening 2a of the outer ring 2 and a bottom surface portion 121b extending radially inward from the fitting portion 121a to close the inner-side opening 2a. The cap part 121 is fitted to the outer ring 2 so as to close the inner-side opening 2a.

The sensor support part 122 protrudes from the bottom surface portion 121b of the cap part 121 toward one side in the axial direction, and supports the rotation speed sensor 13. The sensor support part 122 is disposed on the bottom surface portion 121b at a location facing the magnetic encoder 11. In the present embodiment, the sensor support part 122 of the sensor holder 12 attached to the bearing device for a vehicle wheel 1 is located at an upper end of the bottom surface portion 121b.

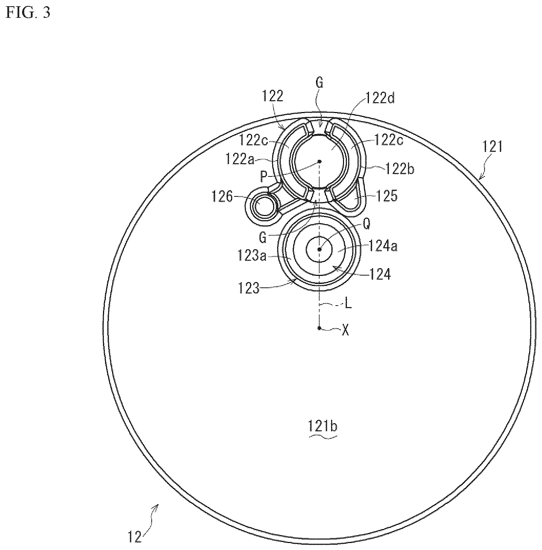

The sensor support part 122 has a first portion 122a and a second portion 122b formed in an arc shape in a view in the axial direction. The first portion 122a and the second portion 122b are disposed to face each other with a gap therebetween, so that the sensor support part 122 has a substantially cylindrical shape having a gap G (see FIG. 3) at an upper end and a lower end as a whole.

The rotation speed sensor 13 is inserted into the sensor support part 122 from one end in the axial direction. In a state where the rotation speed sensor 13 is inserted in the sensor support part 122, rainwater entered into the inside of the sensor support part 122 can be discharged from the gap G to the outside.

A reinforcing portion 125 is formed at a proximal end which is an end portion on the bottom surface portion 121b side of the second portion 122b. The reinforcing portion 125 is formed integrally with the second portion 122b and the bottom surface portion 121b. The reinforcing portion 125 improves the rigidity of the sensor support part 122.

A bottom surface 122d is formed at an end portion on the bottom surface portion 121b side of the sensor support part 122, so that the sensor support part 122 is not penetrating in the axial direction. Therefore, the rotation speed sensor 13 inserted into the sensor support part 122 faces the magnetic encoder 11 through the bottom surface 122d. The bottom surface 122d is formed to be thinner than the other portion, that is, the bottom surface portion 121b.

However, the sensor support part 122 may be formed as a penetrating type that has no bottom surface 122d and in which the rotation speed sensor 13 inserted into the sensor support part 122 directly faces the magnetic encoder 11.

The nut holding part 123 protrudes toward one side in the axial direction from the bottom surface portion 121b of the cap part 121. The nut holding part 123 is formed to be discontinuously separated from the sensor support part 122, and is located on the inner diameter side of the sensor support part 122 on the bottom surface portion 121b. That is, the nut holding part 123 is located closer to the rotation axis X than the sensor support part 122.

As illustrated in FIG. 3, in the present embodiment, center Q of the nut holding part 123 is on a straight line L extending from the rotation axis X to the outer diameter side and connecting the rotation axis X and center P of the sensor support part 122. That is, the rotation axis X, the center Q, and the center P are on the same straight line L. However, the center Q of the nut holding part 123 may be at a location shifted from the straight line L.

The nut holding part 123 is formed in a cylindrical shape, and the nut 124 is held inside the nut holding part 123. The nut 124 can be integrally formed together with the sensor holder 12 by insert molding or the like when the sensor holder 12 is formed. The nut 124 can be fitted in the nut holding part 123 by press fitting after the sensor holder 12 is formed. Furthermore, the nut 124 can be fitted in the nut holding part 123 and then bonded to be fixed to the nut holding part 123.

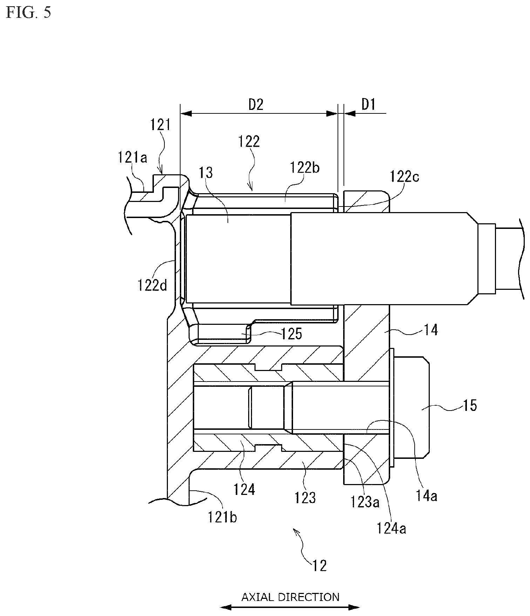

As illustrated in FIG. 5, the mounting flange 14 is fixed to the rotation speed sensor 13. The mounting flange 14 extends in the radial direction from the rotation speed sensor 13 toward the nut holding part 123, and has a fixing hole 14a penetrating in the axial direction at a location facing the nut 124 held by the nut holding part 123.

With the rotation speed sensor 13 fitted in the sensor support part 122, a bolt 15 is inserted into the fixing hole 14a of the mounting flange 14, and the mounting flange 14 is fastened to the nut 124 with the bolt 15, whereby the rotation speed sensor 13 is fixed to the sensor holder 12.

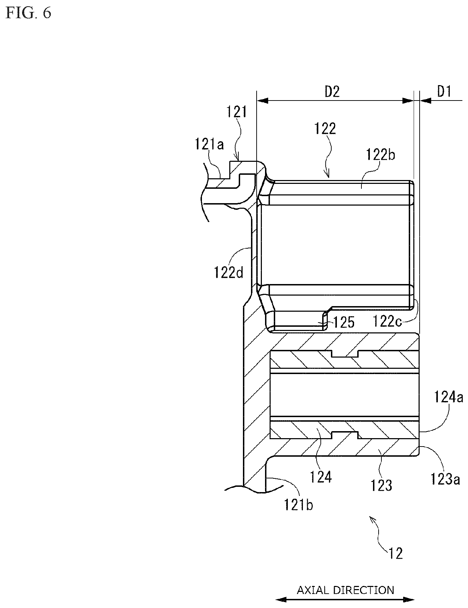

An end surface 124a in the axial direction of the nut 124 is formed so as to protrude toward one side in the axial direction than or to be at the same axial location (see FIG. 6) as an end surface 123a in the axial direction of the nut holding part 123. The end surface 123a of the nut holding part 123 is located in the periphery of the end surface 124a of the nut 124.

Therefore, in fastening of the mounting flange 14 to the nut 124 with the bolt 15, the mounting flange 14 will not contact the end surface 123a of the nut holding part 123 before contacting the end surface 124a of the nut 124, and thus the mounting flange 14 can be brought into tight contact with the end surface 124a of the nut 124. As a result, the rotation speed sensor 13 can be fixed to the sensor holder 12 with high positional accuracy.

As illustrated in FIG. 6, the end surface 124a of the nut 124 protrudes to one side in the axial direction by a dimension D1 further than an end surface 122c in the axial direction of the sensor support part 122. That is, there is a difference in elevation in the axial direction by the dimension D1 between the end surface 124a of the nut 124 and the end surface 122c of the sensor support part 122.

Therefore, as illustrated in FIG. 5, when the mounting flange 14 is fastened to the nut 124 with the bolt 15 to fix the rotation speed sensor 13 to the sensor holder 12, there is a gap in the axial direction by the dimension D1 between the end surface 122c of the sensor support part 122 and the mounting flange 14, so that the mounting flange 14 and the sensor support part 122 are not in contact with each other.

As described above, by forming the sensor support part 122 and the nut holding part 123 separately and with a difference in elevation between each other, even when the sensor support part 122 is warped or the sensor holder 12 has been deformed, tilting of the rotation speed sensor 13 due to deformation of the sensor support part 122 can be suppressed. Accordingly, an effect on the performance of the rotation speed sensor 13 to read the magnetic encoder 11 can be prevented.

The dimension D1 of the difference in elevation between the end surface 124a of the nut 124 and the end surface 122c of the sensor support part 122 is preferably 0.2 mm or more from the viewpoint of preventing tilting of the rotation speed sensor 13. However, an excessively large dimension D1 of the difference in elevation reduces a depth dimension D2, which is an axial length of the sensor support part 122, and may degrade the positional accuracy for supporting the rotation speed sensor 13. Therefore, the dimension D1 of the difference in elevation is preferably set to a value that can secure the depth dimension D2 of 5 mm or more.

In addition, since the sensor support part 122 and the nut holding part 123 are formed separately, there is no need to provide a thick resin member portion for connecting the sensor support part 122 and the nut holding part 123. This makes it easy to form the sensor support part 122 and the nut holding part 123 to have a cylindrical shape having a uniform thickness in the circumferential direction.

In addition, by forming the sensor support part 122 and the nut holding part 123 to have no thick portion, deformation of the sensor holder 12 such as a sink mark and a warp that may happen during resin-forming can be suppressed. Furthermore, since there is no need to perform lightening of a thick portion between the sensor support part 122 and the nut holding part 123, the shape of a mold for forming the sensor holder 12 can be simplified.

In addition, a warp or deformation of the sensor holder 12 that may happen when the sensor holder 12 is press-fitted to the outer ring 2 tends to be larger on the outer diameter side than on the inner diameter side. In this regard, in the sensor holder 12, the nut holding part 123 for fixing the rotation speed sensor 13 with the bolt 15 is on the inner diameter side closer to the rotation axis X than the sensor support part 122. This reduces an effect by deformation or the like of the sensor holder 12 on the posture of the rotation speed sensor 13, and thus tilting of the rotation speed sensor 13 can be suppressed.

As illustrated in FIGS. 2 and 3, the sensor holder 12 includes a gate portion 126. The gate portion 126 serves as an inlet for filling a mold with resin when the sensor holder 12 is formed using the mold. The gate portion 126 is located between the sensor support part 122 and the nut holding part 123 in the radial direction. In the present embodiment, the gate portion 126 is disposed at an intermediate location in the radial direction between the center P of the sensor support part 122 and the center Q of the nut holding part 123. The gate portion 126 is integrally formed with the first portion 122a and the bottom surface portion 121b. The gate portion 126 improves the rigidity of the sensor support part 122.

As described above, disposing the gate portion 126 between the sensor support part 122 and the nut holding part 123 improves the fluidity of resin to be filled in the mold, so that the spaces for forming the sensor support part 122 and the nut holding part 123 can be suitably filled with resin, and the space for forming the bottom surface 122d, which is a thin portion, can also be suitably filled with resin.

In addition, the gate portion 126 is located near the sensor support part 122 and the nut holding part 123 in the circumferential direction, so that filling of resin for the sensor support part 122 and the nut holding part 123 can be suitably performed.

Furthermore, the bearing device for a vehicle wheel 1 according to the present embodiment is configured as a bearing device for a vehicle wheel 1 having a third-generation structure in which the inner raceway surface 3c is directly formed on the outer circumference of the hub ring 3, but is not limited thereto, and may have a second-generation structure in which a pair of inner rings 4 is press-fitted and fixed to the hub ring 3.

Although the embodiment of the present invention have been described above, the present invention is not limited to the embodiment, which are merely an example. The invention is defined by the appended claims.

### INDUSTRIAL APPLICABILITY

The present invention is applicable to a sensor holder and a bearing device for vehicle wheel.

### REFERENCE SIGNS LIST

- 1: bearing device for vehicle wheel
- 2: outer ring
- 2a: inner-side opening
- 2c: outer raceway surface (on inner-side)
- 2d: outer raceway surface (on outer-side)
- 3: hub ring
- 3a: small-diameter stepped portion
- 3c: inner raceway surface (of hub ring)
- 4: inner ring
- 4a: inner raceway surface (of inner ring)
- 5: inner-side ball row
- 6: outer-side ball row
- 13: rotation speed sensor
- 11: magnetic encoder
- 12: sensor holder
- 121: cap part
- 122: sensor support part
- 122c: end surface (of a sensor support part)
- 123: nut holding part
- 124: nut
- 124a: end surface (of a nut)
- X: rotation axis

## Claims

1. A sensor holder (12) attached to an end portion, in an axial direction, of an outer member (2) that is located on an outer diameter side of an inner member (3,4) supporting an encoder (11) at an end portion in the axial direction, and rotatably supports the inner member (3,4) via a double row of rolling elements (5,6), the sensor holder (12) comprising:
a cap part (121) fitted to the outer member (2) so as to close an opening (2a) on one end side in the axial direction of the outer member (2);
a sensor support part (122) that protrudes from the cap part (121) toward one side in the axial direction at a location on the cap part (121) facing the encoder (11) and supports a sensor (13) that detects displacement of the encoder (11); and
a nut holding part (123) that protrudes from the cap part (121) toward one side in the axial direction and holds a nut (124) for fixing the sensor (13) to the cap part (121),
**characterized in that**
the sensor support part (122) and the nut holding part (123) are formed to be separated from each other,
an end surface (124a) on one side in the axial direction of the nut (124) held by the nut holding part (123) protrudes toward one side in the axial direction further than an end surface (123a) in the axial direction of the nut holding part (123) and protrudes toward one side in the axial direction further than an end surface (122c) on one side in the axial direction of the sensor support part (122), and
the nut holding part (123) and the sensor support part (122) have a cylindrical shape and uniform thickness in the circumferential direction.

2. The sensor holder (12) according to claim 1, wherein the nut holding part (123) is located further on an inner diameter side than the sensor support part (122).

3. A bearing device for vehicle wheel comprising:
an outer member (2) having a double row of outer raceway surfaces (2c,2d) on an inner circumference;
an inner member (3,4) including a hub ring (3) having, on an outer circumference, a small-diameter stepped portion (3a) extending in an axial direction, and at least one inner ring (4) press-fitted to the small-diameter stepped portion (3a) of the hub ring (3), the inner member (3,4) having a double row of inner raceway surfaces (3c,4a) facing the double row of outer raceway surfaces (2c,2d);
a double row of rolling elements (5,6) stored between the outer raceway surfaces (2c,2d) of the outer member (2) and the inner raceway surfaces (3c,4a) of the inner member (3,4) so as to roll;
an encoder (11) supported at one end in the axial direction of the inner member (3,4); and
the sensor holder (12) according to claim 1 or 2 attached to one end in the axial direction of the outer member (2).

## Patentansprüche

1. Sensorhalter (12), der an einem in axialer Richtung liegenden Endabschnitt eines Außenelements (2) angebracht wird, welches sich auf einer Außendurchmesserseite eines Innenelements (3, 4) befindet, das an einem in axialer Richtung liegenden Endabschnitt einen Encoder (11) trägt und das Innenelement (3, 4) über eine doppelte Reihe von Wälzkörpern (5, 6) drehbar lagert, wobei der Sensorhalter (12) umfasst:
einen Kappenteil (121), der so an dem Außenelement (2) angebracht ist, dass er eine Öffnung (2a) an einer Endseite des Außenelements (2) in axialer Richtung verschließt;
einen Sensorhalterungsteil (122), der von dem Kappenteil (121) in axialer Richtung zu einer Seite hin an einer Stelle an dem Kappenteil (121) vorsteht, die dem Encoder (11) zugewandt ist, und einen Sensor (13) trägt, der eine Verschiebung des Encoders (11) erfasst; und
einen Mutternhalterungsteil (123), der vom Kappenteil (121) in axialer Richtung zu einer Seite hin vorsteht und eine Mutter (124) zur Befestigung des Sensors (13) am Kappenteil (121) hält,
**dadurch gekennzeichnet, dass**
der Sensorhalterungsteil (122) und der Mutternhalterungsteil (123) voneinander getrennt ausgebildet sind,
eine Endfläche (124a) auf einer Seite in axialer Richtung der vom Mutternhalterungsteil (123) gehaltenen Mutter (124) in axialer Richtung weiter zu einer Seite hin vorsteht als eine Endfläche (123a) in axialer Richtung des Mutternhalterungsteils (123) und in axialer Richtung weiter zu einer Seite hin vorsteht als eine Endfläche (122c) auf einer Seite in axialer Richtung des Sensorhalterungsteils (122), und
der Mutternhalterungsteil (123) und der Sensorhalterungsteil (122) eine zylindrische Form und eine gleichmäßige Dicke in Umfangsrichtung aufweisen.

2. Der Sensorhalter (12) nach Anspruch 1, wobei sich der Mutternhalterungsteil (123) weiter auf der Seite des Innendurchmessers befindet als der Sensorhalterungsteil (122).

3. Lageranordnung für ein Fahrzeugrad, umfassend:
ein Außenelement (2) mit einer doppelten Reihe von Außenlaufflächen (2c, 2d) an einem Innenumfang;
ein Innenelement (3, 4), das einen Nabenring (3) umfasst, der an einem Außenumfang einen sich in axialer Richtung erstreckenden, abgestuften Abschnitt (3a) mit kleinem Durchmesser aufweist, sowie mindestens einen Innenring (4), der durch Presspassung an dem abgestuften Abschnitt (3a) mit kleinem Durchmesser des Nabenrings (3) befestigt ist, wobei das Innenelement (3, 4) eine doppelte Reihe von Innenlaufflächen (3c, 4a) aufweist, die der doppelten Reihe von Außenlaufflächen (2c, 2d) gegenüberliegen;
eine doppelte Reihe von Wälzkörpern (5, 6), die zwischen den Außenlaufflächen (2c, 2d) des Außenelements (2) und den Innenlaufflächen (3c, 4a) des Innenelements (3, 4) so angeordnet sind, dass sie rollen;
einen Encoder (11), der an einem Ende in axialer Richtung des Innenelements (3, 4) gelagert ist; und
den Sensorhalter (12) nach Anspruch 1 oder 2, der an einem Ende in axialer Richtung des Außenelements (2) angebracht ist.

## Revendications

1. Support de capteur (12) attaché à une portion d'extrémité, en direction axiale, d'un élément externe (2) qui est situé côté diamètre externe d'un élément interne (3, 4) supportant un encodeur (11) à une portion d'extrémité en direction axiale, et qui supporte l'élément interne (3, 4) de manière rotative via une double rangée d'éléments roulants (5, 6), le support de capteur (12) comprenant :
une partie capuchon (121) ajustée sur l'élément externe (2) de manière à fermer une ouverture (2a) sur un côté d'extrémité en direction axiale de l'élément externe (2) ;
une partie support de capteur (122) qui dépasse de la partie capuchon (121) vers un côté en direction axiale à un emplacement sur la partie capuchon (121) qui fait face à l'encodeur (11) et supporte un capteur (13) qui détecte un déplacement de l'encodeur (11) ; et
une partie de maintien d'écrou (123) qui dépasse de la partie capuchon (121) vers un côté en direction axiale et maintient un écrou (124) servant à fixer le capteur (13) à la partie capuchon (121),
**caractérisé en ce que**
la partie support de capteur (122) et la partie de maintien d'écrou (123) sont conformées pour être séparées l'une de l'autre,
une surface d'extrémité (124a) sur un côté en direction axiale de l'écrou (124) maintenu par la partie de maintien d'écrou (123) dépasse vers un côté en direction axiale au-delà d'une surface d'extrémité (123a) en direction axiale de la partie de maintien d'écrou (123) et dépasse d'un côté en direction axiale au-delà d'une surface d'extrémité (122c) d'un côté en direction axiale de la partie support de capteur (122), et
la partie de maintien d'écrou (123) et la partie support de capteur (122) ont une forme cylindrique et une épaisseur uniforme en direction circonférentielle.

2. Support de capteur (12) selon la revendication 1, dans lequel la partie de maintien d'écrou (123) est située plus loin sur un côté diamètre interne que la partie support de capteur (122).

3. Dispositif de palier pour roue de véhicule, comprenant :
un élément externe (2) comportant une double rangée de surfaces de chemin de roulement externes (2c, 2d) sur une circonférence interne ;
un élément interne (3, 4) incluant une bague de moyeu (3) qui comporte, sur une circonférence externe, une portion échelonnée de petit diamètre (3a) s'étendant en direction axiale, et au moins une bague interne (4) frettée sur la portion échelonnée de petit diamètre (3a) de la bague de moyeu (3), l'élément interne (3, 4) comportant une double rangée de surfaces de chemin de roulement internes (3c, 4a) faisant face à la double rangée de surfaces de chemin de roulement externes (2c, 2d) ;
une double rangée d'éléments roulants (5, 6) stockés entre les surfaces de chemin de roulement externes (2c, 2d) de l'élément externe (2) et les surfaces de chemin de roulement internes (3c, 4a) de l'élément interne (3, 4) de manière à rouler ;
un encodeur (11) supporté à une extrémité en direction axiale de l'élément interne (3, 4) ; et
le support de capteur (12) selon la revendication 1 ou 2, attaché à une extrémité en direction axiale de l'élément externe (2).
